# DEMANDE DE BREVET EUROPEEN

(11) **EP 3 260 023 A1**
(43) Date de publication de la demande: **27.12.2017**
(21) Numéro de dépôt: 17175488.0
(22) Date de dépôt: 12.06.2017
(51) Int. Cl.: A47J 27/04, A47J 36/00, A47J 43/06, A47J 43/07, A47J 27/12, A47J 27/21

(54) **ENSEMBLE DE PREPARATION DE PLATS POUR ENFANTS, NOTAMMENT DE PLATS POUR BEBES**

(30) Priorité: 13.06.2016 FR 1655426
(71) Demandeur: BABYMOOV GROUP, 63100 Clermont-Ferrand (FR)
(72) Inventeur: PEREIRA, Alexandre, 63170 AUBIERE (FR)
(74) Mandataire: Lavoix

(57) **Abrégé**

L'invention concerne un ensemble de préparation de plats pour enfants, comprenant un premier module de préparation culinaire, tel qu'un module de mixage, et une base de connexion (8 ; 8') pour au moins le premier module (6 ; 4', 6'), la base étant adaptée pour être alimentée en énergie électrique et comprenant un connecteur électrique (90 ; 90', 92) pour brancher le premier module de manière amovible et pour transférer de l'énergie électrique au premier module lorsque celui-ci est branché, ce connecteur électrique (90 ; 90', 92) étant escamotable. L'ensemble comprend un deuxième module de cuisson vapeur (4 ; 4') distinct du premier module (6 ; 6') et la base comprend une interface utilisateur.

## Description

L'invention concerne un ensemble de préparation de plats pour enfants, comprenant une base, un premier module de préparation culinaire, tel que par exemple un module de mixage, un module chauffe-biberon, un module stérilisateur et un deuxième module de cuisson vapeur distinct du premier module.

Il est connu de l'art antérieur un ensemble comprenant un premier module de mixage et un deuxième module de cuisson vapeur. Dans l'art antérieur, le module de mixage comprend une base avec un connecteur électrique pour brancher le deuxième module, un moyen de branchement électrique et une interface utilisateur avec un écran d'affichage et des boutons de commande. Le deuxième module de cuisson vapeur ne peut donc pas être utilisé seul : il doit être branché sur le connecteur électrique de la base pour pouvoir fonctionner.

L'ensemble précité comprend plusieurs inconvénients. Un premier inconvénient est que le module de cuisson vapeur ne peut pas être utilisé seul. Or, une fois que l'enfant grandit, il n'y a plus besoin de mixer les aliments. Le premier module de mixage ne peut donc pas être détaché de l'ensemble, si bien que cet ensemble est relativement encombrant au sein de la cuisine. En outre, lorsque le mixeur est utilisé seul, le connecteur électrique pour brancher le deuxième module reste apparent. D'une part, ce n'est pas très esthétique et, d'autre part, cela peut nuire au bon fonctionnement de l'ensemble car du liquide et autres saletés peuvent s'infiltrer à l'intérieur du connecteur apparent.

C'est à ces inconvénients qu'entend plus particulièrement remédier l'invention en proposant ensemble de préparation de plats pour enfants, avec lequel le module de mixage peut être détaché et rangé dans un placard et avec lequel le module de cuisson vapeur peut être utilisé sans le module de mixage.

A cet effet, l'invention concerne un ensemble comprenant un premier module de préparation culinaire, tel qu'un module de mixage, et une base de connexion pour au moins le premier module, la base étant adaptée pour être alimentée en énergie électrique et comprenant un connecteur électrique pour brancher le premier module de manière amovible et pour transférer de l'énergie électrique au premier module lorsque celui-ci est branché, ce connecteur électrique étant escamotable. Conformément à l'invention, l'ensemble est un ensemble de préparation de plats pour enfants comprenant un deuxième module de cuisson vapeur distinct du premier module, alors que la base comprend une interface utilisateur.

Grâce à l'invention, le module de mixage et la base sont indépendants l'un de l'autre. Ainsi, une fois que l'enfant grandit, le module de mixage peut être détaché de la base et rangé à l'intérieur d'un placard. Cela libère de l'espace sur le plan de travail de la cuisine. En outre, lorsque le module de mixage n'est pas utilisé, le connecteur électrique prévu à cet effet peut être escamoté, c'est-à-dire caché, pour éviter que du liquide et autres saletés s'infiltrent à l'intérieur du connecteur. Cela est en outre plus esthétique.

Selon des aspects avantageux, mais non obligatoires de l'invention, un tel ensemble peut comporter une ou plusieurs des caractéristiques suivantes, prises selon toute combinaison techniquement admissible :
- Le connecteur est monté sur un tiroir apte à coulisser à l'intérieur de la base.
- Le tiroir comprend un moyen de préhension.
- Le moyen de préhension est une encoche.
- La base comprend un détrompeur électronique pour reconnaitre le type de module qui est branché sur le connecteur.
- Le détrompeur électronique est formé par des microcontacts, la base étant alors capable de déterminer quel type de module est branché en fonction de quels microcontacts sont connectés.
- Le deuxième module et la base sont indissociables.
- Le deuxième module ou la base comprend un moyen de branchement à un réseau électrique.
- Le deuxième module peut être détaché de la base.

L'invention et d'autres avantages de celle-ci apparaîtront plus clairement à la lumière de la description de deux modes de réalisation d'un ensemble de préparation de plats pour enfants. Cette description est donnée uniquement à titre d'exemple et est faite en référence aux dessins dans lesquels :
- la figure 1 est une vue en perspective représentant un ensemble comprenant un module de cuisson vapeur et une base de connexion munie d'un connecteur escamotable pour la connexion d'un module de mixage, le connecteur étant escamoté,
- la figure 2 est une vue analogue à la figure 1, sur laquelle le connecteur est visible,
- la figure 3 est une vue analogue aux figures 1 et 2, dans laquelle le module de mixage est connecté à la base,
- la figure 4 est une vue en perspective comparable à celle de la figure 3, représentant un ensemble de préparation de plats pour enfants conforme à un second mode de réalisation de l'invention, cette base comportant deux connecteurs pour la connexion d'un module de cuisson vapeur et d'un module de mixage,
- la figure 5 est une vue en perspective sur laquelle la base de connexion de la figure 4 est représentée seule et dans une configuration où les deux connecteurs sont visibles,
- la figure 6 est une vue analogue à la figure 5, sur laquelle l'un des deux connecteurs est escamoté,
- la figure 7 représente la base de connexion de la figure 6 connectée au module de cuisson vapeur uniquement.

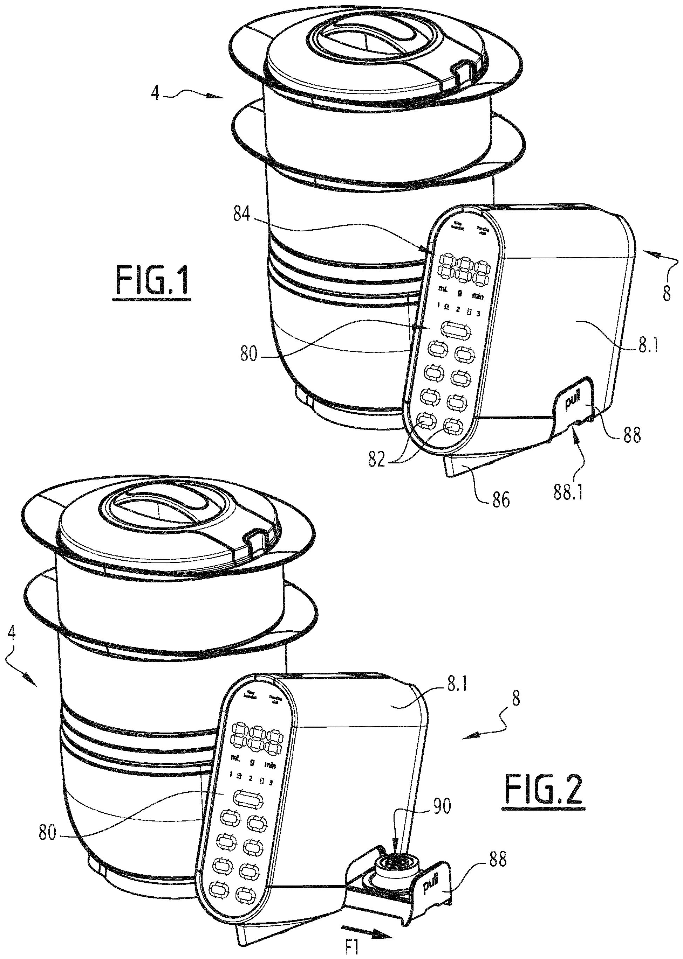

Sur les figures 1 à 3 est représenté un ensemble 2 pour la préparation de plats pour enfants, notamment pour la préparation de plats pour bébés. L'ensemble 2 peut être assimilé à un robot de cuisine.

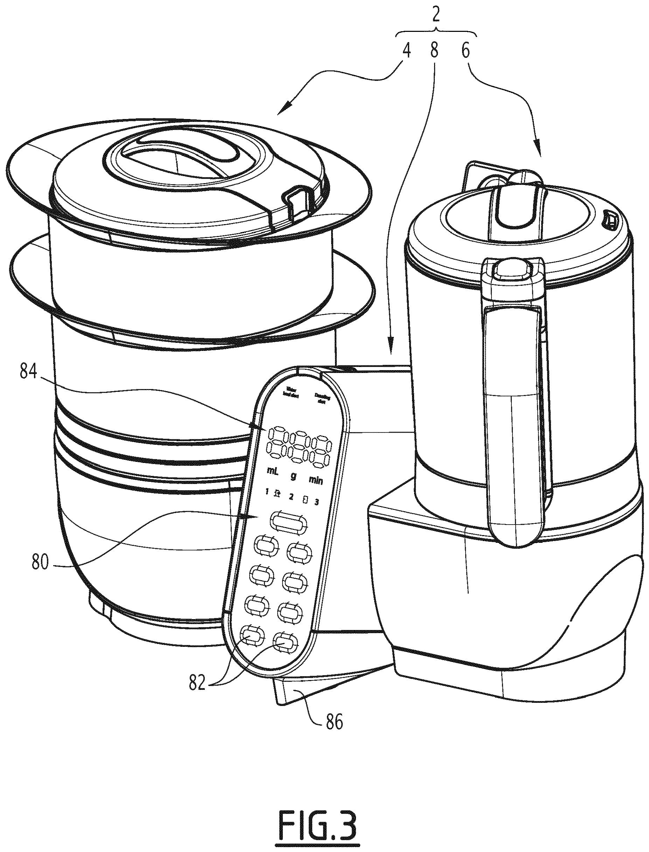

Comme visible à la figure 3, l'ensemble 2 comprend un premier module 4 adapté pour la cuisson vapeur des aliments et un second module 6 pour le mixage des aliments.

Dans le présent document, le terme « module » correspond à un appareil électrique de préparation culinaire, notamment à un appareil électrique utilisé pour la préparation de plats pour bébés.

Chacun des modules 4 et 6 peut être assimilé à un robot de cuisine comprenant tous les composants nécessaires à son fonctionnement. Les modules 4 et 6 sont des modules distincts, c'est-à-dire qu'ils ne peuvent pas être considérés comme des compartiments d'un seul et même robot multifonctions. Dans l'exemple, le module 4 et la base 8 sont indissociables. L'ensemble 2 comprend également une base de connexion 8 sur laquelle le module de mixage 6 peut être branché.

La base de connexion 8 comprend un boîtier 8.1 et une interface utilisateur 80 disposée sur l'une des faces du boitier 8.1. Cette interface utilisateur 80 comporte des boutons de commande 82 et un écran d'affichage 84. L'écran d'affichage 84 peut être utilisé pour afficher le poids des aliments disposés à l'intérieur du module de cuisson vapeur 4 ou encore le nombre de minutes nécessaires à la cuisson des aliments. L'interface utilisateur 80 permet de guider l'utilisateur lors de la préparation du plat.

Le module de cuisson vapeur 4 comprend un moyen de branchement au réseau électrique. Ce moyen de branchement est une prise électrique permettant de brancher l'extrémité d'un câble, l'extrémité opposée du câble étant configurée pour être branchée sur une prise murale ou sur une multiprise. La prise électrique du module 4 n'est pas visible sur les figures 1 à 3 car elle se situe à l'arrière du module 4. La base de connexion 8 et le module de cuisson vapeur 4 étant indissociables, l'énergie électrique puisée par le module 4 sur le réseau électrique peut être transférée à la base 8, notamment pour le fonctionnement de l'interface utilisateur 80.

La base de connexion 8 comprend également un connecteur 90 pour brancher le module de mixage 6. Lorsque le module de mixage 6 est branché sur la base 8, de l'énergie électrique peut être transférée de la base 8 au module de mixage 6 par le connecteur 90. Ainsi, le courant électrique extrait du réseau est d'abord transféré au module de cuisson vapeur 4, puis à la base de connexion 8 et enfin au module de mixage 6. La base 8 est disposée entre les deux modules 4 et 6 lorsque le module de mixage 6 est branché sur le connecteur 90 de la base 8.

Comme visible à la figure 2, le connecteur électrique 90 est monté sur un tiroir coulissant 88. Le tiroir 88 est représenté en position fermée à la figure 1 et en position ouverte à la figure 2. Le connecteur électrique 90 est donc escamotable, c'est-à-dire qu'il peut être rangé à l'intérieur du boitier 8.1 de la base 8 lorsque l'utilisateur ne désire plus utiliser le module de mixage 6. Le module de mixage 6 peut ainsi être rangé dans un placard de la cuisine, ce qui libère de l'espace sur le plan de travail car l'ensemble de préparation devient moins encombrant. Cela permet en outre d'éviter que des saletés, comme de la poussière, de la graisse ou encore du liquide viennent salir le connecteur 90. On assure ainsi le bon fonctionnement de l'appareil lorsque le module de mixage 6 est connecté à nouveau sur la base.

Avantageusement, le tiroir 88 comprend un moyen de préhension pour aider à l'ouverture. Dans l'exemple, ce moyen de préhension est une encoche 88.1 réalisée en partie inférieure du tiroir 88. Toutefois, à titre de variante, l'encoche 88.1 peut être réalisée en partie supérieure du tiroir, ou même sur le côté. Un autre moyen de préhension peut également être envisagé, comme une poignée. L'encoche 88.1 permet à un utilisateur de tirer le tiroir 88 avec son doigt pour sortir le connecteur 90 et connecter le module de mixage 6

Par ailleurs, la base 8 comprend avantageusement un support 86 configuré de telle sorte que l'interface utilisateur 80 est tournée vers le haut lorsque la base 8 est posée sur une surface plane. Cela a pour avantage de rendre l'interface utilisateur 80 mieux visible et mieux accessible lorsque l'utilisateur est positionné debout et lorsque la base 8 est positionnée à mi-hauteur, par exemple sur le plan de travail d'une cuisine.

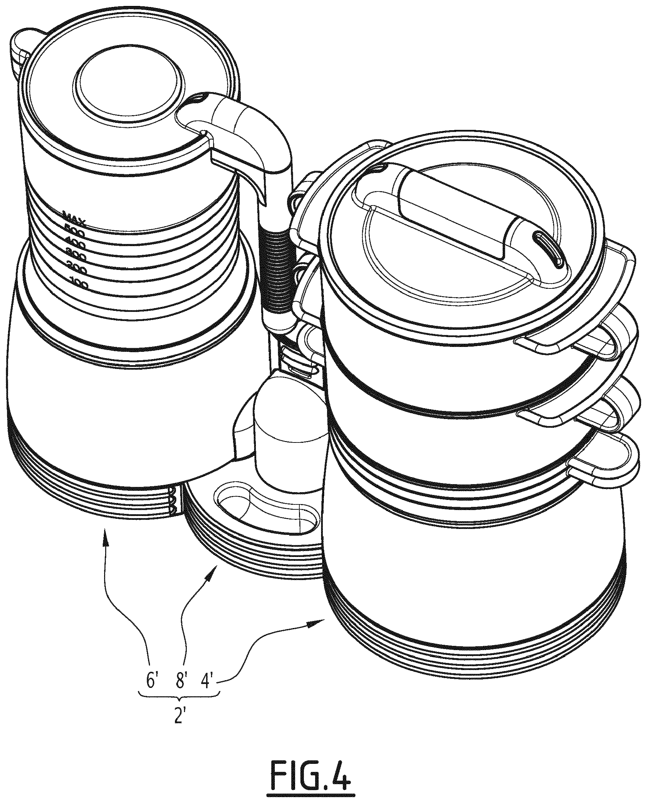

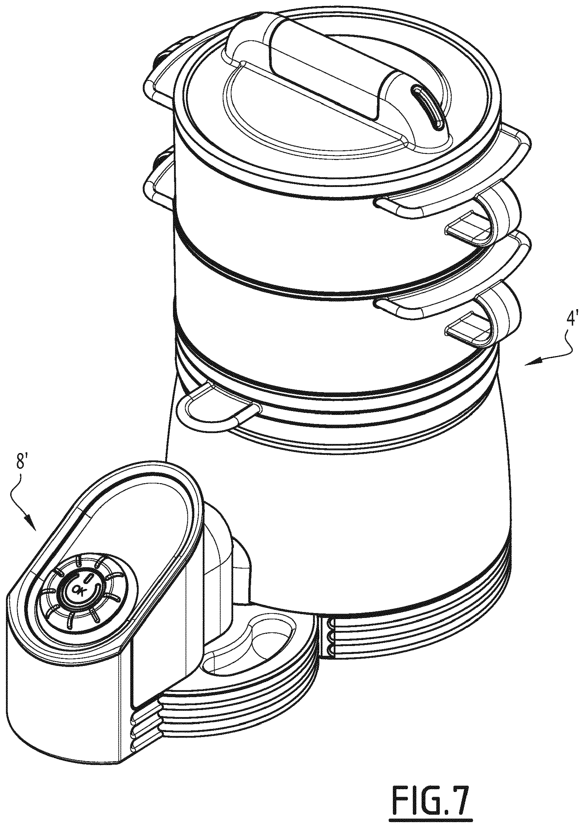

Sur les figures 4 à 7 est représenté un deuxième mode de réalisation d'une base de connexion 8'. Dans ce qui suit, seules les différences par rapport au premier mode de réalisation sont mentionnées par souci de concision. En outre, les éléments comparables à ceux du premier mode de réalisation conservent leur référence numérique, mais celle-ci est suivie d'une prime, alors que les autres éléments portent d'autres références numériques.

Comme visible à la figure 4, la base de connexion 8' est conçue pour permettre la connexion d'un module de cuisson vapeur 4' et d'un module de mixage 6'. Le module de cuisson vapeur 4' et le module de mixage 6' sont donc dissociés de la base de connexion 8'.

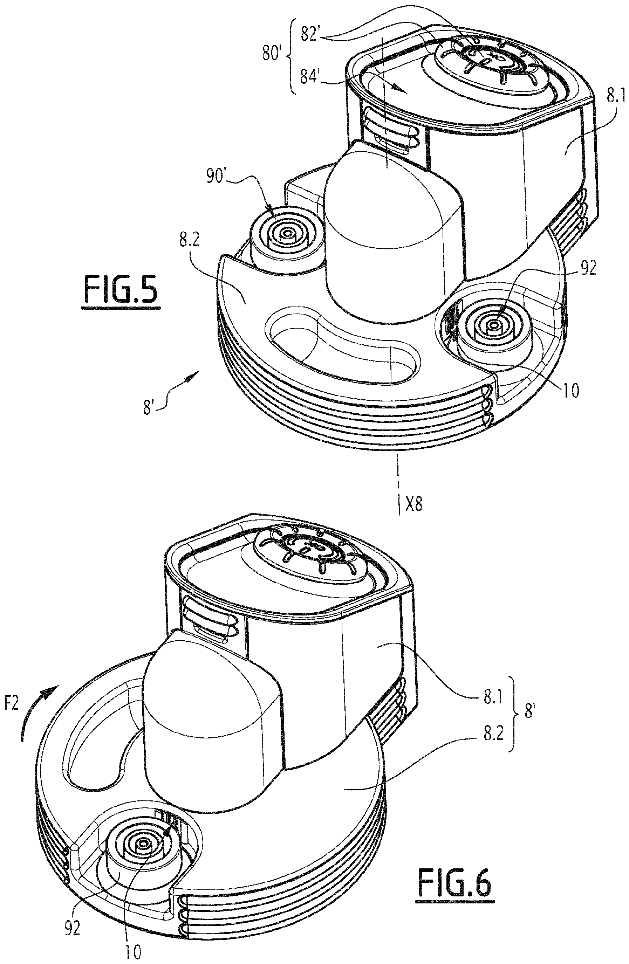

Comme visible à la figure 5, la base de connexion 8' comprend un boîtier 8.1 et un plateau 8.2. Le plateau 8.2 est monté pivotant par rapport au boîtier 8.1 autour d'un axe vertical X8. Comme dans le premier mode de réalisation, le boîtier 8.1 comprend une interface utilisateur 80' comprenant des boutons de commande 82' et un écran d'affichage 84'. Dans cet exemple, les boutons de commande 82' sont formés par une molette tournante et un bouton de validation.

Le plateau tournant 8.2 comprend deux connecteurs, respectivement 90' et 92, pour le branchement du module de mixage 6' et du module de cuisson vapeur 4'. Avantageusement, le module de mixage 6' et le module de cuisson vapeur 4' peuvent être branchés au choix sur le connecteur 90' ou sur le connecteur 92.

Des détrompeurs électroniques sont prévus pour permettre à la base de connexion 8' de reconnaitre le type de module qui est branché sur le connecteur 90' ou 92. On s'assure ainsi que le signal électrique de commande envoyé par la base 8' au module 4' ou 6' soit approprié au type de module qui est branché, et en particulier que la quantité d'énergie électrique transférée par la base 8' au module 4' ou 6' soit adaptée au type d'appareil. En effet, les modules 4' et 6' n'ont pas la même consommation électrique. Dans l'exemple, le détrompage électronique est réalisé par des microcontacts 10 prévus sur la base 8'. Chacun des microcontacts 10 est adapté pour coopérer avec un microcontact complémentaire ménagé sur au moins l'un des modules. Lorsqu'un module est branché sur la base 8', celle-ci peut alors déterminer le type de module qui est branché en fonction de quels microcontacts 10 sont connectés. Cela permet avantageusement de pouvoir brancher sur la base 8' n'importe quelle paire de modules choisis parmi huit modules distincts.

Comme visible à la figure 6, le connecteur 90' est escamotable : celui-ci peut être caché à l'intérieur du boîtier 8.1 par une rotation F2 du plateau 8.2 autour de l'axe X8. Ainsi, lorsque le module de mixage 6' n'est plus utilisé, l'utilisateur pivote le plateau 8.1 pour cacher le connecteur 90' à l'intérieur du boîtier 8.2. Cela permet d'éviter d'exposer le connecteur 90' aux salissures lorsque le module de mixage 6' n'est pas utilisé.

La base de connexion 8' comprend un moyen de branchement au réseau électrique. Ce moyen de branchement n'est pas représenté sur les figures mais il s'agit en pratique d'une prise électrique prévue pour le branchement d'un câble. Il peut également s'agir d'un câble indissociable de la base 8', destiné à être branché à une prise murale ou sur une multiprise.

Lors du fonctionnement du module de cuisson vapeur 4' et/ou du module de mixage 6', l'énergie électrique fournie par le réseau à la base 8' est en partie transférée, grâce au connecteur 90' et/ou 92, vers le module de cuisson vapeur 4' et/ou vers le module de mixage 6'.

A titre de variante non représentée, applicable au premier mode de réalisation, le module de cuisson vapeur 4 et la base de connexion 8 sont dissociés l'un de l'autre. La base de connexion 8 comprend alors un autre tiroir pour le branchement du module de cuisson vapeur 4. Cet autre tiroir peut être identique au tiroir 88.

Selon une autre variante non représentée applicable au premier mode de réalisation, le tiroir ne comprend aucun moyen de préhension. Un ressort est alors agencé pour aider à l'ouverture du tiroir. Ce ressort peut être activé par une simple pression de la part de l'utilisateur, de manière comparable aux systèmes d'ouverture de lecteur de disque qui équipent les ordinateurs.

Selon une autre variante non représentée applicable au premier mode de réalisation, le tiroir 88 est remplacé par un clapet. Ce clapet pourra être prévu pour pivoter autour d'un axe horizontal ou autour d'un axe vertical.

Selon une autre variante non représentée applicable au premier mode de réalisation, le moyen de branchement au réseau électrique peut aussi être intégré à la base 8. De même, au lieu d'une prise électrique, le moyen de branchement peut être un câble d'un seul tenant avec le module 4 ou la base 8 et comprenant une extrémité destinée à être branchée à une prise électrique murale ou à une multiprise.

Selon une autre variante non représentée, applicable aux deux modes de réalisation, la base de connexion, respectivement 8 ou 8', peut être prévue pour coopérer avec un nombre de modules supérieur à 2. Il est par exemple envisageable de brancher un module chauffe-biberon ou encore un module stérilisateur.

Selon une autre variante non représentée applicable aux deux modes de réalisation, le module de mixage peut être remplacé par tout autre type de module de préparation culinaire, comme un module chauffe-biberon, un module stérilisateur, un module pour la préparation de smoothies, une centrifugeuse, etc... La base de connexion 8 selon le premier mode de réalisation pourrait alors être munie d'un détrompeur électronique comparable à ceux décrits en relation avec le second mode de réalisation, c'est-à-dire de microcontacts 10, pour reconnaître le type de module qui est branché parmi les différentes possibilités. L'ensemble de préparation pourrait alors prendre la forme d'une base et de plusieurs modules, pouvant chacun être branché sur la base.

Les caractéristiques techniques des variantes et modes de réalisation envisagés ci-dessus peuvent être combinées entre elles pour générer de nouveaux modes de réalisation de l'invention.

## Revendications

1. Ensemble (2 ; 2'), comprenant :
- un premier module de préparation culinaire, tel qu'un module de mixage, et
- une base de connexion (8 ; 8') pour au moins le premier module (6 ; 4', 6'), la base étant adaptée pour être alimentée en énergie électrique et comprenant un connecteur électrique (90 ; 90', 92) pour brancher le premier module de manière amovible et pour transférer de l'énergie électrique au premier module lorsque celui-ci est branché, ce connecteur électrique (90 ; 90', 92) étant escamotable,
**caractérisé en ce que** l'ensemble est un ensemble de préparation de plats pour enfants comprenant un deuxième module de cuisson vapeur (4 ; 4') distinct du premier module (6 ; 6') et **en ce que** la base comprend une interface utilisateur.

2. Ensemble selon la revendication 1, dans lequel le deuxième module (4) et la base (8) sont indissociables.

3. Ensemble selon la revendication 2, dans lequel le deuxième module (4) ou la base (8) comprend un moyen de branchement à un réseau électrique.

4. Ensemble selon la revendication 1, dans lequel le deuxième module (4') peut être détaché de la base (8').

5. Ensemble selon l'une des revendications précédentes, dans lequel le connecteur (90) est monté sur un tiroir (88) apte à coulisser à l'intérieur de la base.

6. Ensemble selon la revendication 5, **caractérisé en ce que** le tiroir (88) comprend un moyen de préhension (88.1).

7. Ensemble selon la revendication 6, **caractérisé en ce que** le moyen de préhension est une encoche (88.1).

8. Ensemble selon l'une des revendications précédentes, **caractérisé en ce que** la base comprend un détrompeur électronique (10) pour reconnaître le type de module qui est branché sur le connecteur (90).

9. Ensemble selon la revendication 8, **caractérisé en ce que** le détrompeur électronique est formé par des microcontacts (10), la base étant alors capable de déterminer quel type de module (6 ; 4', 6') est branché en fonction de quels microcontacts (10) sont connectés.
